(19) Europäisches Patentamt / European Patent Office / Office européen des brevets

(11) **EP 3 857 074 B1**

(12) **EUROPÄISCHE PATENTSCHRIFT**

(45) Veröffentlichungstag und Bekanntmachung des Hinweises auf die Patenterteilung:
**12.01.2022 Patentblatt 2022/02**

(21) Anmeldenummer: **20838425.5**

(22) Anmeldetag: **17.12.2020**

(51) Int Cl.:
*F15B 20/00* (2006.01)     *F15B 19/00* (2006.01)
*F15B 5/00* (2006.01)

(86) Internationale Anmeldenummer:
**PCT/EP2020/086838**

(87) Internationale Veröffentlichungsnummer:
**WO 2021/123029 (24.06.2021 Gazette 2021/25)**

(54) **VERFAHREN ZUM PRÜFEN DER FUNKTIONSFÄHIGKEIT EINES MAGNETVENTILS ZUM AUSLÖSEN EINES SICHERHEITSVENTILS**

METHOD FOR TESTING THE FUNCTIONALITY OF A SOLENOID VALVE FOR TRIGGERING A SAFETY VALVE

PROCÉDÉ DE TEST DE LA FONCTIONNALITÉ D'UNE ÉLECTROVANNE POUR LE DÉCLENCHEMENT D'UNE SOUPAPE DE SÉCURITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.12.2019 DE 102019135327**

(43) Veröffentlichungstag der Anmeldung:
**04.08.2021 Patentblatt 2021/31**

(73) Patentinhaber: **Samson Aktiengesellschaft 60314 Frankfurt (DE)**

(72) Erfinder: **WAGNER-STÜRZ, David 64367 Mühltal (DE)**

(74) Vertreter: **Köllner & Partner mbB Vogelweidstraße 8 60596 Frankfurt am Main (DE)**

(56) Entgegenhaltungen:
**DE-A1-102008 045 775     US-B2- 10 240 687**

**Beschreibung**

Gebiet der Erfindung

Die Erfindung betrifft ein Verfahren zum Prüfen der Funktionsfähigkeit eines Magnetventils zum Auslösen eines Sicherheitsventils, sowie eine entsprechende Vorrichtung. Derartige Verfahren dienen dazu, die Betriebssicherheit einer Anlage dadurch zu gewährleisten, dass sichergestellt wird, dass ein Sicherheitsventil im Sicherheitsfall auch auslöst. Mit einem solchen Verfahren können die Wartungsintervalle für Anlagen mit Sicherheitsventilen gegebenenfalls optimaler gestaltet werden.

Stand der Technik

Sicherheitsventile müssen z.B. in der chemischen Industrie regelmäßig auf ihre Funktionsfähigkeit überprüft werden. Um die Funktionsfähigkeit eines Sicherheitsventils gewährleisten zu können, müssen sowohl das Magnetventil, das zum Auslösen des Sicherheitsventils dient, als auch das eigentliche Sicherheitsventil zuverlässig arbeiten.

Sicherheitsventile werden beispielsweise über einen Antrieb betätigt, der betriebsmäßig mit einem Magnetventil in Verbindung mit einer Steuerung gekoppelt ist. Als Antrieb dient typischerweise ein einfachwirkender fluidischer Antrieb. Der Antrieb umfasst beispielsweise einen Kolben oder eine Membran, der bzw. die in einer Kammer angeordnet und mit einer Feder gekoppelt ist. Wenn der Druck in der Kammer eine Kraft auf den Kolben ausübt, die größer als eine voreingestellte Last der Feder oder gleich groß ist, verhindert dieser Druck, dass die Feder und somit der Antrieb betätigt werden, wodurch das Sicherheitsventil in der Betriebsposition gehalten wird. Wenn der Druck in der Kammer unter die Last der Feder fällt, bewirkt die Feder, dass der Kolben in der Kammer betätigt wird. In dem Fall bringt der Antrieb das Sicherheitsventil von der Betriebsposition in die Sicherheitsposition.

In einigen Fällen wird die Position des Stellglieds durch das Magnetventil gesteuert. Beispielsweise entlüftet das Magnetventil den Antrieb, wenn von der Steuerung ein Notsignal empfangen wird und ein gefährlicher Zustand erkannt wird. Dazu gibt das Magnetventil z.B. eine Verbindung des Antriebs mit der Umgebungsluft frei, wodurch der Druck im Antrieb abgebaut wird. Da ein Sicherheitsventil in der Regel im Gefahrenfall schnell auslösen muss, ist der dabei freigegebene Querschnitt typischerweise relativ groß, so dass sich der Druck innerhalb einer vorgegebenen, kurzen Zeit abbauen kann.

Ein Teil der Überprüfung der Funktionsfähigkeit eines Sicherheitsventils wird mittels Teilhubtest (Partial-Stroke-Testverfahren, PST) durchgeführt. Dabei wird das Ventilglied während laufender Anlage um ca. 10 bis 15% seines Hubs bewegt. Dadurch wird der Betrieb der Anlage nicht wesentlich beeinträchtigt, aber die Beweglichkeit des Ventilgliedes wird nachgewiesen. Damit werden die häufigsten Fehler ausgeschlossen. Durch diesen Test wird die Funktionsfähigkeit des Antriebs des Ventilglieds bestimmt; ein Teilhubtest ist nicht geeignet, die Funktion eines Magnetventils zu überprüfen, das zum Auslösen des Sicherheitsventils dient.

In der Druckschrift US 10 240 687 B2 werden Verfahren und Vorrichtungen zum Prüfen eines Magnetventils eines Sicherheitsventils mittels eines Stellungsreglers offenbart. Dazu wird das Magnetventil veranlasst, während einer vorgegebenen Impulsdauer von einem ersten Zustand in einen zweiten Zustand überzugehen, also auszulösen. Der Stellungsregler ermittelt die Funktionsfähigkeit des Magnetventils durch Messung der maximalen Druckänderung im Antrieb des Sicherheitsventils während der Impulsdauer. Wenn festgestellt wird, dass sich das Magnetventil in einem funktionierenden Zustand befindet, führt der Stellungsregler anschließend noch einen Teilhubtest des Sicherheitsventils durch.

Die Druckschrift DE 10 2008 045 775 A1 beschreibt auch ein Verfahren zur Überwachung der Funktionsfähigkeit eines Sicherheitsventils, das durch ein Magnetventilgesteuert wird. Das Magnetventil wird dabei mit einer festen Schaltzeit geschaltet, die so kurz sein soll, dass die Position des Sicherheitsventils im Wesentlichen konstant bleibt, aber lang genug, dass ein Druckabfall gemessen werden kann.

Ein Verfahren zur Überprüfung der Funktion eines Magnetventils ist auch aus der Veröffentlichung WO 2007/087030 A1 bekannt. Vorhanden sind eine digitale Ventilsteuerung, ein auf/zu-Ventil und zwei Drucksensoren, die mit einem pneumatischen Antrieb und einem Magnetventil verbunden sind. Zum Testen des Magnetventils kann die Ventilsteuerung den Druck an verschiedenen Anschlüssen des Magnetventils messen, wenn das Magnetventil für einen sehr kurzen Zeitraum betätigt wird. Die Ventilsteuerung kann, basierend auf der Änderungsrate der Differenz zwischen den gemessenen Drucksignalen über die Zeit, bestimmen, ob das Magnetventil funktionsfähig ist.

Ähnliche Verfahren und Vorrichtungen sind auch aus den Veröffentlichungen US 10 041 610 B2 und US 10 234 058 B2 bekannt.

Die Veröffentlichung US 8 540 211 B2 beschreibt ein Verfahren für einen Teilhubtest für ein Sicherheitsventil, bei dem als Abbruchkriterium Eigenschaften des Fluidstroms dienen. Zur Steuerung des Sicherheitsventils kann auch hier ein Magnetventil dienen. Dessen Funktionsfähigkeit wird jedoch nicht gesondert überprüft.

Der Nachteil bei solchen Anordnungen und Verfahren ist, dass es nicht möglich ist, die Funktionsfähigkeit des Magnetventils zu bestimmen, ohne dass die Position des Ventilglieds des Sicherheitsventils verändert wird.

Aus der Veröffentlichung DE 199 24 377 B4 ist ein Diagnosesystem für ein von einem Stellungsregler über einen Antrieb betätigbares Ventil bekannt. Dieses beruht darauf, bei leicht geöffnetem Ventil ein Körperschallspektrum aufzunehmen und bei geschlossenem Ventil den Körperschall mit dem aufgenommenen Spektrum zu vergleichen, um auf mögliche Undichtigkeiten des Ventils schließen zu können. Ein besonderer Bezug zu Sicherheitsventilen ist hierbei nicht gegeben. Insbesondere ist ein Prüfen der Funktionsfähigkeit eines Magnetventils nicht vorgesehen.

Aufgabe

Aufgabe der Erfindung ist es, ein Verfahren und eine Vorrichtung anzugeben, welche ermöglichen, das Magnetventil eines Sicherheitsventils zu testen, ohne das Ventilglied des Sicherheitsventils zu bewegen.

Lösung

Diese Aufgabe wird durch den Gegenstand des unabhängigen Anspruchs gelöst. Vorteilhafte Weiterbildungen des Gegenstands des unabhängigen Anspruchs sind in den Unteransprüchen gekennzeichnet. Der Wortlaut sämtlicher Ansprüche wird hiermit durch Bezugnahme zum Inhalt dieser Beschreibung gemacht.

Die Verwendung der Einzahl soll die Mehrzahl nicht ausschließen, was auch im umgekehrten Sinn zu gelten hat, soweit nichts Gegenteiliges offenbart ist.

Im Folgenden werden einzelne Verfahrensschritte näher beschrieben. Die Schritte müssen nicht notwendigerweise in der angegebenen Reihenfolge durchgeführt werden, und das zu schildernde Verfahren kann auch weitere, nicht genannte Schritte aufweisen.

Zur Lösung der Aufgabe wird ein Verfahren zum Prüfen der Funktionsfähigkeit eines Magnetventils zum Auslösen eines Sicherheitsventils vorgeschlagen. Als Voraussetzungen hat das Sicherheitsventil einen einfachwirkenden, fluidischen Antrieb für ein Ventilglied - mit einem Antriebsfluid - sowie einen Stellungsregler, der den Druck im Antriebsfluid bestimmt und die Position des Ventilglieds regelt. Das Ventilglied nimmt eine Sicherheitsposition ein, wenn der Druck im Antriebsfluid einem Umgebungsdruck entspricht, und nimmt eine Betriebsposition ein, wenn der Druck im Antriebsfluid einem Betriebsdruck entspricht. Das Magnetventil lässt in einer Betriebsposition den Druck im Antriebsfluid unbeeinflusst, während es in einer Sicherheitsposition den Druck im Antriebsfluid absenkt. Das Verfahren umfasst die folgenden Schritte:

• Falls das Ventilglied sich nicht in seiner Betriebsposition befinden sollte, wird es in diese verfahren.

• Der Druck im Antriebsfluid wird um eine erste Druckdifferenz über den Betriebsdruck hinaus erhöht. Insbesondere ist also der Betriebsdruck niedriger als der maximal mögliche Druck im Antrieb.

• Ein Ereignis wird ausgelöst, infolgedessen das Magnetventil seine Sicherheitsposition einnehmen sollte. Typischerweise wird hierzu die Stromzufuhr zum Magnetventil unterbrochen.

• Der Druck im Antriebsfluid wird kontinuierlich und/oder zu einem vorgegebenen Zeitpunkt nach dem auslösenden Ereignis gemessen, wobei der vorgegebene Zeitpunkt derart gewählt ist, dass der Druck im Antriebsfluid um maximal die erste Druckdifferenz absinkt. Der Druck im Antriebsfluid sollte also zu diesem Zeitpunkt nicht niedriger liegen als der vorher anliegende Betriebsdruck.

• Entweder gilt die Prüfung der Funktionsfähigkeit des Magnetventils als nicht bestanden, wenn der Druck im Antriebsfluid zu dem vorgegebenen Zeitpunkt höher als ein zugehöriger Referenzdruck ist.

• Oder die Prüfung der Funktionsfähigkeit des Magnetventils gilt als bestanden und wird abgebrochen, sobald der Druck während der kontinuierlichen Messung vor dem oder am vorgegebenen Zeitpunkt niedriger liegt als der Referenzdruck.

Als Referenzdruck kann z.B. der Betriebsdruck gewählt werden - dieser Fall ist besonders einfach. Sowohl der Referenzdruck als auch der vorgegebene Zeitpunkt können ggf. mit einer Toleranz versehen werden, z.B. 2% oder 5%. Naturgemäß ist diese Toleranz beim Referenzdruck nur nach oben von Bedeutung.

Ein solches Verfahren ermöglicht, die grundlegende Funktionsfähigkeit des Magnetventils zu überprüfen und insbesondere sicherzustellen, dass es - wenn erforderlich - in die Sicherheitsposition schaltet und in diesem Zustand tatsächlich den Druck im Antrieb des Sicherheitsventils absenkt. Durch die entsprechende Wahl des vorgegebenen Zeitpunkts kann zudem das Absenken des Drucks im Antriebsfluid über einen definierten Zeitraum überwacht werden, nicht bloß für die unbestimmte Dauer eines möglichst kurzen Pulses. Dies lässt gegebenenfalls auch Rückschlüsse auf den Zustand des Druckerzeugungssystems für das Antriebsfluid zu. Sollte der Druck im Antriebsfluid auch bei Erreichen des vorgegebenen Zeitpunkts nicht den Referenzdruck unterschreiten, gilt die Prüfung als nicht bestanden. Sollte dieser Fall eintreten, kann beispielsweise zusätzlich untersucht werden, ob ggf. die Luftleistung im Druckluftsystem zu niedrig ist, d.h. insbesondere, ob sich der Druck z.B. wegen verstopfter Filter nicht schnell genug abbaut.

Dadurch, dass der Druck im Antriebsfluid zunächst um die erste Druckdifferenz erhöht wird, ist zudem sichergestellt, dass er bei der Überprüfung der Funktion des Magnetventils nicht unter den Betriebsdruck absinkt. Dadurch wird sichergestellt, dass der Antrieb des Sicherheitsventils sich nicht bewegt, sondern die Position des Ventilglieds konstant bleibt. Der Prozess bzw. der Betrieb der Anlage, die das Sicherheitsventil beinhaltet, wird also durch diese Prüfung nicht beeinträchtigt.

Zudem lässt sich, aufgrund der größeren Druckdifferenz gegenüber anderen Prüfungsverfahren für Magnetventile, eine Änderung der Entlüftungsgeschwindigkeit (Luftleistung) des Systems besser erkennen. Dies eröffnet im Fehlerfall weitergehende Diagnosemöglichkeiten und/oder Rückschlüsse auf die Fehlerursache.

Das Verfahren gestaltet sich besonders einfach, wenn die erste Druckdifferenz die Differenz zwischen dem maximal möglichen Druck im Antriebsfluid und dem Betriebsdruck ist.

In diesem einfachen Fall kann die erste Druckdifferenz bestimmt werden, nachdem der Antrieb mit dem maximal möglichen Druck beaufschlagt und dieser gemessen wurde. Es ist also nicht erforderlich, eine erste Druckdifferenz vor Beginn des Verfahrens vorzugeben.

Besonders sicher lässt sich verhindern, dass der Druck im Antriebsfluid des Sicherheitsventils unter den Betriebsdruck absinkt, wenn eine zweite Druckdifferenz dadurch gebildet wird, dass die vorgegebene erste Druckdifferenz mit einem Faktor multipliziert wird, der kleiner als 1 ist, und wenn der mindestens eine vorgegebene Zeitpunkt derart gewählt ist, dass der Druck im Antriebsfluid um maximal die zweite Druckdifferenz absinkt. Der Druck im Antriebsfluid sinkt dann nur auf einen Wert, der oberhalb des Betriebsdrucks liegt, so dass eine gewisse Sicherheitsmarge vorhanden ist. Eine Bewegung des Sicherheitsventils infolge der Prüfung der Funktionsfähigkeit des Magnetventils kann auf diese Weise mit besonders hoher Sicherheit ausgeschlossen werden.

Vorzugsweise ist der Antrieb für das Ventilglied pneumatisch. Pneumatisch angetriebene Ventile sind allgemein bekannt und können alle notwendigen Voraussetzungen für sicherheitsrelevante Einsätze erfüllen. Das erfindungsgemäße Verfahren eignet sich besonders gut für die Prüfung der Funktionsfähigkeit von Magnetventilen, die bei einem pneumatischen Stellantrieb eines Sicherheitsventils den Sicherheitsfall auslösen.

Bei einer bevorzugten Weiterbildung des Verfahrens dient eine erste Durchführung des Verfahrens an dem Magnetventil eines Sicherheitsventils als Referenzmessung. Dabei werden der Betriebsdruck und die erste Druckdifferenz und/oder der maximal erreichbare Druck im Antrieb des Sicherheitsventils bestimmt und als Referenzwerte gespeichert. Die Zeit, die benötigt wird, damit der Druck im Antrieb um die erste Druckdifferenz absinkt, wird ebenfalls bestimmt und als Referenzwert gespeichert. Dadurch wird ein maximaler Wert für den mindestens einen vorgegebenen Zeitpunkt erhalten. Auf diese Weise lässt sich leicht ein sinnvoller Wert für den vorgegebenen Zeitpunkt festlegen, ausgehend beispielsweise vom Verhältnis der ersten Druckdifferenz eines späteren Tests zu dem Referenzwert für die erste Druckdifferenz. Zu den Referenzwerten kann, wie bereits erwähnt, ggf. eine vorgegebene Toleranz hinzugefügt werden (z.B. 2%).

Vorzugsweise gilt die Prüfung der Funktionsfähigkeit des Magnetventils als bestanden, wenn der Druck im Antriebsfluid zu dem mindestens einen vorgegebenen Zeitpunkt niedriger liegt als der Referenzdruck. Dann ergibt die Prüfung nämlich, dass das Magnetventil so schaltet, dass innerhalb der Zeit bis zum vorgegebenen Zeitpunkt sich der Druck im Antriebsfluid um einen ausreichenden Betrag senkt, eben gerade bis zum Referenzdruck.

Eine Bewegung des Antriebs des Sicherheitsventils wird mit besonders hoher Sicherheit vermieden, wenn der Referenzdruck höher ist als der Betriebsdruck und mit Hilfe der zweiten Druckdifferenz ermittelt wird. Insbesondere kann der Referenzdruck dann gegeben sein durch Betriebsdruck + erste Druckdifferenz - zweite Druckdifferenz, oder bevorzugt Maximaldruck - zweite Druckdifferenz. Dadurch wird besonders sicher ausgeschlossen, dass die erfindungsgemäße Funktionsprüfung den Betrieb der Anlage bzw. des Prozesses beeinträchtigt. Wie bereits weiter oben beschrieben, kann ggf. zu den Referenzwerten, insbesondere dem Referenzdruck, eine vorgegebene Toleranz hinzugefügt werden (z.B. 2%, beim Referenzdruck ist nur die Toleranz nach oben von Bedeutung).

Eine präzisere Diagnose ist möglich, wenn als Kriterien für die Prüfung der Funktionsfähigkeit des Magnetventils außerdem ein akustisches Signal oder eine Stromverlaufskurve des Magnetventils die Funktionsfähigkeit desselben nachweisen. Dies ermöglicht insbesondere dann weitere Diagnosemöglichkeiten, wenn die Kriterien in Bezug auf den Druck im Antriebsfluid zu dem vorgegebenen Zeitpunkt nicht erreicht werden, da sich auf diese Weise ermitteln lässt, ob das Problem im Magnetventil selbst oder beispielsweise im Druckluftsystem zu suchen ist.

Komplizierte Aufbauten mit zusätzlichen Steuerungs- und/oder Regeleinheiten lassen sich vermeiden, wenn das erfindungsgemäße Verfahren auf dem Stellungsregler des Sicherheitsventils abläuft.

Dies wird weiter erleichtert, wenn Drucksensoren zum Messen des Drucks im Antriebsfluid im Stellungsregler bereitgestellt werden.

Um das Sicherheitsventil wieder in seinen normalen Betriebszustand zu bringen, ist es vorteilhaft, wenn im Anschluss an das oben beschriebene Verfahren folgende weiteren Schritte durchgeführt werden: Nach der Prüfung der Funktionsfähigkeit des Magnetventils wird ein Ereignis ausgelöst, infolgedessen das Magnetventil wieder seine Betriebsposition einnimmt; und der Stellungsregler regelt den Druck im Antriebsfluid wieder auf den Betriebsdruck.

Eine Prüfung der Funktionsfähigkeit eines Sicherheitsventils an einer Anlage kann besonders effizient gestaltet werden, wenn im Anschluss an das weiter oben beschriebene Verfahren zur Prüfung der Funktionsfähigkeit eines Magnetventils zum Auslösen eines Sicherheitsventils als weiterer Schritt an dem Sicherheitsventil ein Teilhubtest durchgeführt wird.

Weitere Einzelheiten und Merkmale ergeben sich aus der nachfolgenden Beschreibung von bevorzugten Ausführungsbeispielen in Verbindung mit den Figuren. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.

Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:

Fig. 1    eine schematische Darstellung eines Sicherheitsventils mit Magnetventil, bei dem ein erfindungsgemäßes Verfahren zum Einsatz kommen kann;

Fig. 2    eine Kurve, die den zeitlichen Verlauf des Drucks im Antrieb eines Sicherheitsventils bei der Durchführung einer Variante des erfindungsgemäßen Verfahrens schematisch darstellt; und

Fig. 3    eine Kurve, die den zeitlichen Verlauf des Drucks im Antrieb eines Sicherheitsventils bei der Durchführung einer vereinfachten Variante des erfindungsgemäßen Verfahrens schematisch darstellt.

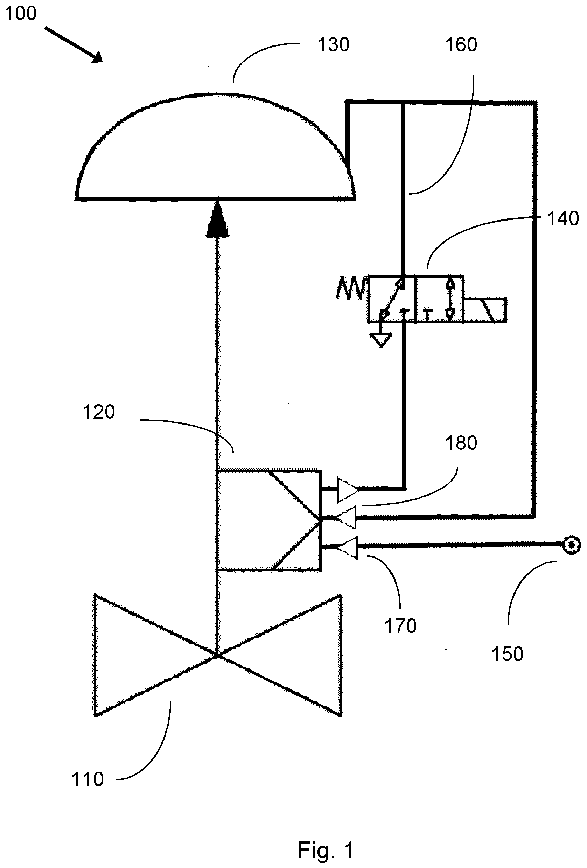

In Fig. 1 ist der schematische Aufbau eines typischen Sicherheitsventils 100 dargestellt. Dazu gehört das eigentliche Ventil 110 mit dem Ventilglied, das mittels eines pneumatischen Antriebs 130 betätigt wird. Die Druckverhältnisse im Antrieb werden im Sicherheitsfall durch das Magnetventil 140 gesteuert. Das Magnetventil wird im Normalbetrieb bestromt (die Stromversorgung ist nicht gezeichnet). Wird die Stromversorgung des Magnetventils 140 unterbrochen, schaltet es in seine Sicherheitsposition und gibt eine Verbindung vom Antrieb zur Atmosphäre frei, wodurch der Druck im Antrieb auf Umgebungsdruck absinkt und das Ventil 110 in die Sicherheitsstellung verfahren wird. Dieser Zustand ist in der schematischen Darstellung von Fig. 1 zu sehen: die linke Ventilposition ist aktiv, in der die Steuerleitung 160 zwischen dem Stellungsregler 120 und Antrieb 130 unterbrochen ist und stattdessen eine Verbindung des Antriebs zur Atmosphäre geschaltet ist, angedeutet durch den Pfeil links unten am Magnetventil 140. Wäre das Magnetventil 140 in seiner Betriebsposition, wäre die rechte Hälfte aktiv, die die Steuerleitung 160 zwischen Stellungsregler 120 und Antrieb 130 freigibt.

Der Stellungsregler 120 ist an dem Sicherheitsventil 100 montiert und regelt die Hubposition des Ventilglieds sowie den Druck 180 im Antrieb. Der Stellungsregler 120 ist dazu in der Lage, kurzzeitig die Stromversorgung des Magnetventils 140 zu unterbrechen, um eine Prüfung der Funktionsfähigkeit des Magnetventils 140 durchzuführen. Durch eine Zuluftleitung 150 ist die Druckluftversorgung des Stellungsreglers 120 dargestellt. Der Antrieb 130 wird mit dem Stellungsregler 120 über die Steueranschlussleitung 160 verbunden. Hinter dem Magnetventil 140 wird der Druck ferner auf den Messanschluss 180 des Stellungsreglers 120 geführt. Der Druck in der Zuluftleitung 150 wird mittels des Drucksensors 170 bestimmt.

Da der Zuluftdruck schwankt und der Antriebsdruck sich auch infolge von Änderungen des Prozesses oder durch Reibung verändern kann, wird die erste Durchführung des erfindungsgemäßen Verfahrens an einem konkreten Sicherheitsventil als Referenz für dieses Sicherheitsventil verwendet. Das heißt, es werden eine Druckdifferenz sowie die zugehörige Zeit, die zum Abbau dieser Druckdifferenz benötigt wird, als Referenzwerte gespeichert. Somit ist die Zeit für diesen definierten Druckabfall bestimmt. Bei jeder weiteren Durchführung werden die auftretenden Druckdifferenzen immer mit den gespeicherten Referenzwerten verglichen.

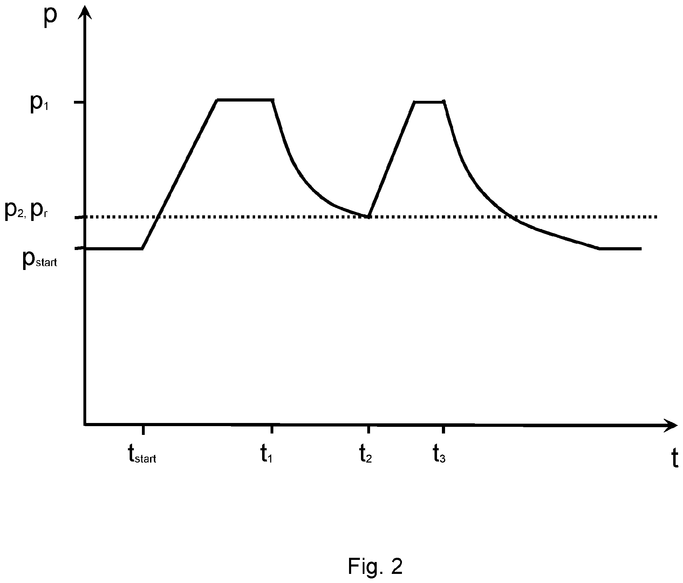

Bei jeder Durchführung des erfindungsgemäßen Verfahrens wird zunächst der Start- bzw. Betriebsdruck $p_{start}$ über den Sensor 180 gemessen. Ein beispielhafter Druckverlauf ist schematisch in Fig. 2 dargestellt. Vom Startzeitpunkt $t_{start}$ an wird der Antrieb 130 durch den Stellungsregler auf den maximalen Zuluftdruck $p_1$ vollständig belüftet. Anschließend wird die maximale Druckdifferenz

$$dp = p_1 - p_{start}$$

und die modifizierte Druckdifferenz f * dp berechnet. Dabei ist f < 1, z.B. f = 0,8. Nach dem vollständigen Belüften des Antriebs 130 wird die Stromversorgung des Magnetventils 140 vom Zeitpunkt $t_1$ an unterbrochen. Dabei sollte das Magnetventil von seiner Betriebsposition in die Sicherheitsposition schalten. Dadurch wird die Druckluftversorgung des Antriebs 130 über die Steuerleitung 160 unterbrochen und eine Verbindung zur Atmosphäre geöffnet, so dass sich der Druck im Antrieb 130 zum Umgebungsdruck hin absenken sollte.

An dieser Stelle können zwei Fälle eintreten:

Entweder die Druckdifferenz dp oder, bevorzugt, f * dp wird erreicht und der Druck im Antrieb 130 wurde auf ein entsprechendes Niveau

$$p_r = p_1 - f * dp$$

abgebaut (der vorgegebene Referenzdruck, durch die gepunktete Linie dargestellt). Dies bedeutet, dass das Magnetventil wie gefordert arbeitet, der Test also als bestanden gewertet wird.

Oder ein vorgegebener Zeitpunkt wird überschritten, ohne dass das Druckniveau $p_r$ erreicht wird. Dann gilt der Test als nicht bestanden.

Nach Eintreten eines dieser Fälle wird das Magnetventil wieder bestromt, wodurch es in die Betriebsposition schaltet.

In Fig. 2 ist der erste Fall - Test bestanden - dargestellt, und zwar für die Variante des Verfahrens, bei der der Druck kontinuierlich überwacht wird. Das geforderte Druckniveau $p_r$ wurde bereits zum Zeitpunkt $t_2$ erreicht. Zu diesem Zeitpunkt wird der Test abgebrochen, der vorgegebene Zeitpunkt also gar nicht abgewartet. Der Abbruchdruck $p_2$, der am Ende dieses Testvorgangs erreicht wird, ist also (bei Bestehen) gleich dem Referenzdruck $p_r$. Der vorgegebene Zeitpunkt wird - sofern welche vorliegen - aus den gespeicherten Referenzwerten für den Abbau der Druckdifferenz bestimmt, wie oben angegeben.

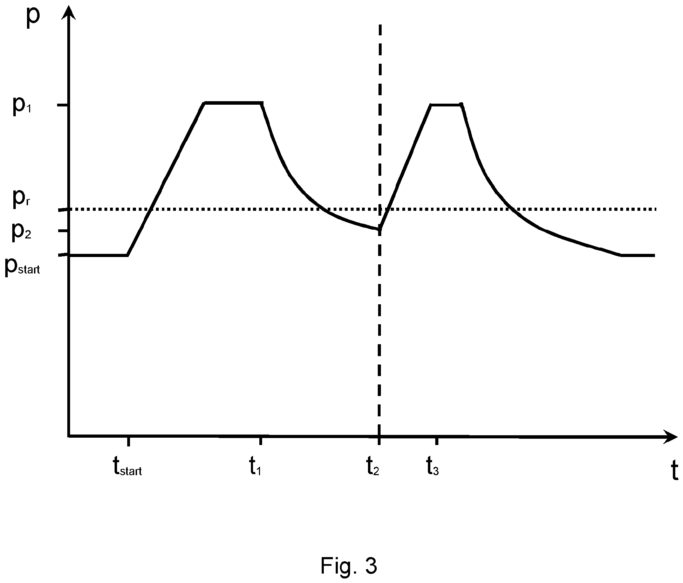

Der schematische Druckverlauf bei einer vereinfachten Variante des erfindungsgemäßen Verfahrens ist in Fig. 3 zu sehen. Hierbei wird auf eine kontinuierliche Druckmessung verzichtet. Lediglich zum vorgegebenen Zeitpunkt $t_2$ (gestrichelte Linie in Fig. 3), zu dem der Test beendet wird, wird der Druck gemessen. Der Druck $p_2$ zu diesem Zeitpunkt liegt - in dem Fall, dass der Test bestanden wurde - niedriger als der Referenzdruck $p_r$, der bereits vorher unterschritten wurde. Durch die Vorgaben für den Zeitpunkt $t_2$ und die relevanten Druckdifferenzen ist jedoch trotzdem sichergestellt, dass der Enddruck $p_2$ oberhalb des Betriebsdrucks $p_{start}$ liegt.

Die Position des Ventilglieds bleibt bei diesem Vorgang unverändert, insbesondere weil $p_2$ oberhalb von $p_{start}$ liegt. Dies wird durch den Faktor f sichergestellt. Die Zeitdauer, in der das Magnetventil in die Sicherheitsstellung geschaltet war, wird gemessen. Der Test wird durchgeführt, bis der Druck im Antrieb 130 um die geforderte Differenz f * dp abgesunken ist (dann gilt er als bestanden), oder bis ein durch den vorgegebenen Zeitpunkt festgelegtes Zeitlimit überschritten ist - dann gilt er als nicht bestanden.

In diesem Fall, aber auch wenn sich die Luftleistung um einen vorgegebenen Betrag geändert haben sollte, kann ein Warnsignal ausgegeben werden.

Als weitere Diagnoseinformationen können akustische Signale (z.B. Klacken oder Zischen) und/oder eine aufgenommene Stromverlaufskurve des Magnetventils dienen. Insbesondere die aufgenommene Stromverlaufskurve beim Schalten des Magnetventils in die Sicherheitsposition kann über den Verschleißzustand des Magnetventils informieren.

Nachdem das Magnetventil 140 wieder in die Betriebsstellung geschaltet wurde, erhöht sich der Druck im Antrieb 130 wieder, da die Steuerungsleitung 160 noch mit der Druckluftversorgung 150 verbunden ist. Nach dem Abschluss der Prüfung der Funktionsfähigkeit des Magnetventils regelt der Stellungsregler 120 den Druck im Antrieb wieder auf den Betriebsdruck $p_{start}$, um die Position des Ventilgliedes wieder in normaler Weise zu regeln. Dies ist in Fig. 2 für Zeiten nach $t_3$ angedeutet.

In einer praktischen Anwendung kann das Druckluftsystem beispielsweise einen ZuluftDruck von 4 bar bereitstellen. Als Betriebsdruck im Antrieb würde dann z.B. 2 bar verwendet. Als Druckdifferenz ergibt sich dann dp = 2 bar. Diese Druckdifferenz wird, wie bereits beschrieben, mit einem Faktor, der kleiner als 1 ist, multipliziert, um eine Bewegung des Ventilantriebs während der Prüfung besonders sicher zu vermeiden. Beispielsweise könnte der Faktor f = 0,8 sein. Dann ist f * dp = 1,6 bar und somit sind 0,4 bar Druckreserve bis zu dem Bereich vorhanden, in dem eine Bewegung des Ventilantriebes - z.B. bei Auftreten weiterer Druckschwankungen oder anderer Störungen - beginnen könnte.

Den Befehl zum Auslösen der erfindungsgemäßen Prüfung der Funktionsfähigkeit des Magnetventils kann der Stellungsregler mittels eines Kommunikationsprotokolls (z.B. HART Signals, Funk Signals, Advanced Physical Layer / APL, Profibus etc.) oder mittels eines Binärsignals oder per Vorortbedienung empfangen.

Glossar

Fluidischer Antrieb eines Ventils

Man spricht von einem fluidisch angetriebenen Ventil, wenn die Antriebsstange des Ventils von einer Membran bewegt wird, die durch ein Fluid, typischerweise Druckluft, mit Druck beaufschlagt und dadurch positioniert wird.

Magnetventil

Ein Magnetventil ist ein Ventil mit elektromagnetischem Antrieb. Magnetventile können - abhängig von der Bauart - sehr schnell schalten.

Referenzdruck

Darunter ist ein vorgegebener Druck zu verstehen, der beim Ablauf des erfindungsgemäßen Verfahrens innerhalb einer bestimmten Zeit zu unterschreiten ist.

Sicherheitsventil

Als Sicherheitsventile werden hier Stellarmaturen mit einer Auf/Zu-Arbeitsweise und sicherheitsrelevanter Anwendung bezeichnet. Stellarmaturen bestehen aus einem - typischerweise fluidischen - Antrieb und einem beweglichen Ventilglied und dienen zum Regulieren eines Fluidstromes. Die Art der Ventile können sowohl Drehventile als auch Hubventile sein. Im Bereich sicherheitsrelevanter Armaturen werden in der Regel einfachwirkende Pneumatikantriebe verwendet. Die von Federkräften einseitig vorgespannten Antriebe verfahren eigenständig in eine sichere Position, wenn der Antrieb entlüftet wird, also die Druckluft aus der Kammer des Antriebes entweicht. Dies geschieht z.B. dann, wenn ein Strom-Druck(I/P)-Wandler oder ein Magnetventil nicht mehr bestromt wird.

Bei Sicherheitsarmaturen ist häufig das Sicherheitsventil im normalen Betrieb offen, und im Fehlerfall (z.B. Stromausfall) schließt das Sicherheitsventil eigenständig. Die Druckluft wirkt immer gegen die Federkraft. Entlüftet man nun den Antrieb, beginnt das Ventil sich zu schließen, da die Federkräfte freigesetzt werden. Die Sicherheitsstellung kann auch stromlos offen sein (Antrieb entlüftet) und bestromt geschlossen (Antrieb belüftet). In der Sicherheitsposition liegt im Antrieb also nur der Umgebungsdruck vor.

Oft sind die Sicherheitsventile so konfiguriert, dass sie die Betriebsposition (z.B. voll geöffnet) bei einem Betriebsdruck erreichen, der unterhalb des maximal möglichen Drucks im Antrieb liegt. Dies ist vor allem deshalb sinnvoll, weil der maximal zur Verfügung stehende Druck aufgrund der Eigenschaften der Druckerzeugungsanlagen häufig stärkeren Schwankungen unterliegt.

Teilhubtest (Partial Stroke Test, PST)

Um den sicheren Betrieb einer Armatur zu gewährleisten, wird regelmäßig bzw. zyklisch getestet, ob sich das Stellglied auch bewegt. Bei diesen Tests ist es nicht gewünscht, dass die Armatur vollständig in die Sicherheitsstellung verfährt, um den laufenden Betrieb nicht zu stören. Bei einem Teilhubtest wird das Stellglied nur soweit verfahren, wie erforderlich ist, um sicherzustellen, dass das Stellglied einen Teil der Strecke verfährt, ohne den Prozess der Anlage maßgeblich zu beeinflussen. Dabei wird auch getestet, ob sich das Stellglied überhaupt noch von seiner Position löst bzw. losbricht. Das Stellglied fährt nach dem Teilhubtest wieder in seine Ausgangsposition zurück. Mit diesem Test kann die grundlegende Bewegbarkeit des Stellgliedes geprüft werden.

Ventilglied

Das Ventilglied ist dasjenige Element, das das Ventil schließt, wenn es auf den Ventilsitz gepresst wird.

Bezugszeichen

| | |
|---|---|
| 100 | Sicherheitsventil |
| 110 | eigentliches Ventil; Ventilgehäuse mit Ventilglied |
| 120 | Stellungsregler |
| 130 | Ventilantrieb |
| 140 | Magnetventil |
| 150 | Druckluftversorgung |
| 160 | Steuerleitung |
| 170 | Drucksensor für Zuluftleitung |
| 180 | Drucksensor für Antriebsdruck |
| p | Druck |
| $p_1$ | Maximaldruck |
| $p_2$ | Druck am Ende der Prüfung |
| $p_{start}$ | Betriebsdruck |
| $p_r$ | Referenzdruck |
| t | Zeit |
| $t_1$ | Zeitpunkt zum Schalten des Magnetventils |
| $t_2$ | Ende des Prüfzeitraums |
| $t_3$ | Übergang zur Regelung auf Betriebsdruck |
| $t_{start}$ | Beginn der Prüfung |

zitierte Literatur

zitierte Patentliteratur

US 10 240 687 B2
WO 2007/087030 A1
US 10 041 610 B2
US 10 234 058 B2
US 8 540 211 B2
DE 10 2006 045 775 A1
DE 199 24 377 B4

**Patentansprüche**

1. Verfahren zum Prüfen der Funktionsfähigkeit eines Magnetventils (140) zum Auslösen eines Sicherheitsventils (100) mit einem Ventilglied;

   1.1 wobei das Sicherheitsventil (100) einen einfachwirkenden, fluidischen Antrieb (130) für das Ventilglied aufweist, der durch ein Antriebsfluid angetrieben wird;
   1.2 wobei das Sicherheitsventil (100) einen Stellungsregler (120) aufweist, der den Druck im Antriebsfluid bestimmt und die Position des Ventilglieds regelt;
   1.3 wobei das Ventilglied eine Sicherheitsposition einnimmt, wenn der Druck im Antriebsfluid einem Umgebungsdruck entspricht;
   1.4 wobei das Ventilglied eine Betriebsposition einnimmt, wenn der Druck im Antriebsfluid einem Betriebsdruck entspricht;
   1.5 wobei das Magnetventil (140) in einer Betriebsposition den Druck im Antriebsfluid unbeeinflusst lässt;
   1.6 wobei das Magnetventil (140) in einer Sicherheitsposition den Druck im Antriebsfluid absenkt;
   wobei das Verfahren die folgenden Schritte umfasst:

      1.7 falls das Ventilglied sich nicht in seiner Betriebsposition befindet, wird es in diese verfahren;
      1.8 der Druck im Antriebsfluid wird um eine erste Druckdifferenz über den Betriebsdruck hinaus erhöht;

1.9 ein Ereignis wird ausgelöst, infolgedessen das Magnetventil (140) seine Sicherheitsposition einnehmen sollte;

1.10 der Druck im Antriebsfluid wird kontinuierlich und/oder zu einem vorgegebenen Zeitpunkt nach dem auslösenden Ereignis gemessen;

1.11 wobei der vorgegebene Zeitpunkt derart gewählt ist, dass der Druck im Antriebsfluid um maximal die erste Druckdifferenz absinkt; und entweder

1.12 die Prüfung der Funktionsfähigkeit des Magnetventils als nicht bestanden gilt, wenn der Druck im Antriebsfluid zu dem vorgegebenen Zeitpunkt höher als ein zugehöriger Referenzdruck ist; oder

1.13 die Prüfung der Funktionsfähigkeit des Magnetventils als bestanden gilt und abgebrochen wird, sobald der Druck während der kontinuierlichen Messung vor dem oder am vorgegebenen Zeitpunkt niedriger liegt als der Referenzdruck.

2. Verfahren nach dem vorhergehenden Anspruch,
   **dadurch gekennzeichnet,**
   **dass** die erste Druckdifferenz die Differenz zwischen dem maximal möglichen Druck im Antriebsfluid und dem Betriebsdruck ist.

3. Verfahren nach einem der vorhergehenden Ansprüche,
   **dadurch gekennzeichnet,**
   **dass** die erste Druckdifferenz bestimmt wird, nachdem der Antrieb (130) mit dem maximal möglichen Druck beaufschlagt und dieser gemessen wurde.

4. Verfahren nach einem der vorhergehenden Ansprüche, **dadurch gekennzeichnet,**

   **dass** eine zweite Druckdifferenz dadurch gebildet wird, dass die vorgegebene erste Druckdifferenz mit einem Faktor multipliziert wird; wobei der Faktor größer als Null und kleiner als 1 ist; und
   **dass** der mindestens eine vorgegebene Zeitpunkt derart gewählt ist, dass der Druck im Antriebsfluid um maximal die zweite Druckdifferenz absinkt.

5. Verfahren nach einem der vorhergehenden Ansprüche,
   **dadurch gekennzeichnet,**
   **dass** der Antrieb für das Ventilglied pneumatisch ist.

6. Verfahren nach einem der vorhergehenden Ansprüche,
   **dadurch gekennzeichnet,**

6.1 dass eine erste Durchführung des Verfahrens an dem Magnetventil (140) des Sicherheitsventils (100) als Referenzmessung dient;

6.1.1 wobei der Betriebsdruck und die erste Druckdifferenz im Antrieb des Sicherheitsventils gemessen oder eingestellt und als Referenzwerte gespeichert werden; und

6.1.2 wobei die Zeit, die benötigt wird, damit der Druck im Antrieb um die erste Druckdifferenz absinkt, bestimmt und als Referenzwert gespeichert wird;

6.2 wodurch ein maximaler Wert für den mindestens einen vorgegebenen Zeitpunkt erhalten wird.

7. Verfahren nach einem der vorhergehenden Ansprüche,
   **dadurch gekennzeichnet,**
   **dass** die Prüfung der Funktionsfähigkeit des Magnetventils als bestanden gilt, wenn der Druck im Antriebsfluid zu dem mindestens einen vorgegebenen Zeitpunkt niedriger liegt als der Referenzdruck.

8. Verfahren nach den Ansprüchen 4 und 6,
   **dadurch gekennzeichnet,**
   **dass** der Referenzdruck höher ist als der Betriebsdruck und mit Hilfe der zweiten Druckdifferenz ermittelt wird.

9. Verfahren nach einem der vorhergehenden Ansprüche,
   **dadurch gekennzeichnet,**
   **dass** die Prüfung der Funktionsfähigkeit des Magnetventils erst dann als bestanden gilt, wenn außerdem ein akustisches Signal oder eine Stromverlaufskurve des Magnetventils (140) die Funktionsfähigkeit desselben nachweist.

10. Verfahren nach einem der vorhergehenden Ansprüche,
    **dadurch gekennzeichnet,**
    **dass** das Verfahren auf dem Stellungsregler (120) abläuft.

11. Verfahren nach einem der vorhergehenden Ansprüche,
    **dadurch gekennzeichnet,**
    **dass** Drucksensoren (170, 180) zum Messen des Drucks im Antriebsfluid im Stellungsregler (120) bereitgestellt werden.

12. Verfahren nach einem der vorhergehenden Ansprüche,
    mit den folgenden weiteren Schritten:

    nach der Prüfung der Funktionsfähigkeit des Magnetventils wird ein Ereignis ausgelöst, infolgedessen das Magnetventil (140) wieder seine Betriebsposition einnimmt; und
der Stellungsregler (120) regelt wieder die Position des Ventilglieds, wobei der Druck im Antriebsfluid wieder auf den Betriebsdruck gebracht wird.

13. Verfahren nach einem der vorhergehenden Ansprüche,
mit dem folgenden weiteren Schritt:

es wird an dem Sicherheitsventil (100, 110) ein Teilhubtest durchgeführt.


**Claims**

1. Method for testing the operability of a solenoid valve (140) for triggering a safety valve (100) having a valve member;

1.1 wherein the safety valve (100) has a single-acting fluidic drive (130) for the valve member, which is driven by a drive fluid;
1.2 wherein the safety valve (100) has a positioner (120) that determines the pressure in the drive fluid and controls the position of the valve member;
1.3 wherein the valve member assumes a safety position when the pressure in the drive fluid corresponds to an ambient pressure;
1.4 wherein the valve member assumes an operating position when the pressure in the drive fluid corresponds to an operating pressure;
1.5 wherein the solenoid valve (140) leaves the pressure in the drive fluid unaffected in an operating position;
1.6 wherein the solenoid valve (140) lowers the pressure in the drive fluid in a safety position;
wherein the method comprises the following steps:

1.7 should the valve member not be in its operating position, it is moved thereto;
1.8 the pressure in the drive fluid is increased above the operating pressure by a first pressure difference;
1.9 an event is triggered as a result of which the solenoid valve (140) should assume its safety position;
1.10 the pressure in the drive fluid is measured continuously and/or at a predetermined point in time after the triggering event;
1.11 the predetermined point in time being chosen such that the pressure in the drive fluid drops at most by the first pressure difference; and either
1.12 the test of the operability of the solenoid valve is considered failed if the pressure in the drive fluid at the predetermined point in time is higher than an associated reference pressure; or
1.13 the test of the operability of the solenoid valve is considered passed and is aborted as soon as the pressure during continuous measurement before or at the predetermined point in time is lower than the reference pressure.

2. Method according to the preceding claim,
**characterized in that**
the first pressure difference is the difference between the maximum possible pressure in the drive fluid and the operating pressure.

3. Method according to any one of the preceding claims,
**characterized in that**
the first pressure difference is determined after the drive (130) was pressurized to the maximum possible pressure and this pressure was measured.

4. Method according to any one of the preceding claims,
**characterized in that**

a second pressure difference is formed by multiplying the predetermined first pressure difference by a factor;
the factor being greater than zero and less than 1; and
that the at least one predetermined point in time is selected such that the pressure in the drive fluid decreases at most by the second pressure difference.

5. Method according to any one of the preceding claims,
**characterized in that**
the drive for the valve member is pneumatic.

6. Method according to any one of the preceding claims,
**characterized in that**

6.1 a first execution of the method on the solenoid valve (140) of the safety valve (100) serves as a reference measurement;
6.1.1 wherein the operating pressure and the first pressure difference in the drive of the safety valve are measured or set and stored as reference values; and
6.1.2 wherein the time required for the pressure in the drive to drop by the first pressure difference is determined and stored as a reference value;

6.2 whereby a maximum value is obtained for the at least one predetermined point in time.

7. Method according to any one of the preceding claims,
**characterized in that**
the test of the operability of the solenoid valve is considered passed if the pressure in the drive fluid is lower than the reference pressure at the at least one predetermined point in time.

8. Method according to claims 4 and 6,
**characterized in that**
the reference pressure is higher than the operating pressure and is determined with the aid of the second pressure difference.

9. Method according to any one of the preceding claims,
**characterized in that**
the test of the operability of the solenoid valve is only considered passed when, in addition, an acoustic signal or a current curve of the solenoid valve (140) proves the operability thereof.

10. Method according to any one of the preceding claims,
**characterized in that**
the method runs on the positioner (120).

11. Method according to any one of the preceding claims,
**characterized in that**
pressure sensors (170, 180) for measuring the pressure in the drive fluid are provided in the positioner (120).

12. Method according to any one of the preceding claims,
comprising the following further steps:

after testing the operability of the solenoid valve, an event is triggered, as a result of which the solenoid valve (140) resumes its operating position; and
the positioner (120) again controls the position of the valve member, wherein the pressure in the drive fluid is returned to the operating pressure.

13. Method according to any one of the preceding claims,
comprising the following further step:
a partial stroke test is performed on the safety valve (100, 110).

**Revendications**

1. Procédé de contrôle de l'aptitude au fonctionnement d'une électrovanne (140) pour le déclenchement d'une soupape de sécurité (100) avec un organe de soupape ;

1.1 la soupape de sécurité (100) présentant un entraînement fluidique à simple effet (130) pour l'organe de soupape, qui est entraîné par un fluide d'entraînement ;
1.2 la soupape de sécurité (100) comporte un régulateur de position (120) qui détermine la pression dans le fluide d'entraînement et régule la position de l'organe de soupape ;
1.3 dans lequel l'organe de soupape prend une position de sécurité lorsque la pression dans le fluide d'entraînement correspond à une pression ambiante ;
1.4 l'organe de soupape prend une position de fonctionnement lorsque la pression dans le fluide d'entraînement correspond à une pression de fonctionnement ;
1.5 dans une position de fonctionnement, l'électrovanne (140) n'affecte pas la pression dans le fluide d'entraînement ;
1.6 dans une position de sécurité, l'électrovanne (140) abaisse la pression dans le fluide d'entraînement ;
le procédé comprenant les étapes suivantes :

1.7 si l'organe de soupape n'est pas dans sa position de fonctionnement, il est déplacé vers celle-ci ;
1.8 la pression dans le fluide d'entraînement est augmentée d'une première différence de pression au-delà de la pression de fonctionnement ;
1.9 un événement est déclenché, à la suite duquel l'électrovanne (140) doit prendre sa position de sécurité ;
1.10 la pression dans le fluide d'entraînement est mesurée en continu et/ou à un instant prédéfini après l'événement déclencheur ;
1.11 l'instant prédéfini étant choisi de telle sorte que la pression dans le fluide d'entraînement diminue au maximum de la première différence de pression ; et soit
1.12 le contrôle de l'aptitude au fonctionnement de l'électrovanne est considéré comme non réussi si la pression dans le fluide d'entraînement est supérieure à une pression de référence correspondante à l'instant prédéfini, ou bien
1.13 le contrôle du fonctionnement de l'électrovanne est considéré comme réussi et est interrompu dès que la pression est inférieure à la pression de référence pendant la mesure continue avant ou à l'instant prédéfini.

2. Procédé selon la revendication précédente, **caractérisé en ce que** la première différence de pression est la différence entre la pression maximale possible dans le fluide d'entraînement et la pression de fonctionnement.

3. Procédé selon l'une des revendications précédentes, **caractérisé en ce que** la première différence de pression est déterminée après que l'entraînement (130) a été soumis à la pression maximale possible et que celle-ci a été mesurée.

4. Procédé selon l'une quelconque des revendications précédentes, **caractérisé en ce**

qu'une deuxième différence de pression est formée en multipliant la première différence de pression prédéfinie par un facteur ; le facteur étant supérieur à zéro et inférieur à 1 ; et en ce que le au moins un instant prédéfini est choisi de telle sorte que la pression dans le fluide d'entraînement diminue au maximum de la deuxième différence de pression.

5. Procédé selon l'une des revendications précédentes, **caractérisé en ce que** l'entraînement de l'organe de soupape est pneumatique.

6. Procédé selon l'une des revendications précédentes, **caractérisé en ce**

6.1 qu'une première mise en œuvre du procédé sur l'électrovanne (140) de la soupape de sécurité (100) sert de mesure de référence ; 6.1.1 la pression de fonctionnement et la première différence de pression dans l'entraînement de la soupape de sécurité étant mesurées ou réglées et enregistrées comme valeurs de référence ; et 6.1.2 le temps nécessaire pour que la pression dans l'entraînement diminue de la première différence de pression étant déterminé et enregistré comme valeur de référence ; 6.2 ce qui permet d'obtenir une valeur maximale pour ledit au moins un instant prédéfini.

7. Procédé selon l'une quelconque des revendications précédentes, **caractérisé en ce que** le contrôle du bon fonctionnement de l'électrovanne est considéré comme réussi si la pression dans le fluide d'entraînement est inférieure à la pression de référence à l'au moins un instant prédéfini.

8. Procédé selon les revendications 4 et 6, **caractérisé en ce que** la pression de référence est supérieure à la pression de fonctionnement et est déterminée à l'aide de la deuxième différence de pression.

9. Procédé selon l'une des revendications précédentes, **caractérisé en ce que** le contrôle du fonctionnement de l'électrovanne n'est considéré comme réussi que si, en outre, un signal acoustique ou une courbe de courant de l'électrovanne (140) prouve le bon fonctionnement de celle-ci.

10. Procédé selon l'une des revendications précédentes, **caractérisé en ce que** le procédé se déroule sur le régulateur de position (120).

11. Procédé selon l'une des revendications précédentes, **caractérisé en ce que** des capteurs de pression (170, 180) sont prévus pour mesurer la pression dans le fluide d'entraînement dans le régulateur de position (120).

12. Procédé selon l'une quelconque des revendications précédentes, comprenant les étapes supplémentaires suivantes :

après la vérification du fonctionnement de l'électrovanne, un événement est déclenché, à la suite duquel l'électrovanne (140) reprend sa position de fonctionnement ; et le régulateur de position (120) règle à nouveau la position de l'organe de soupape, la pression dans le fluide d'entraînement étant ramenée à la pression de fonctionnement.

13. Procédé selon l'une quelconque des revendications précédentes, comprenant l'étape supplémentaire suivante : un test de course partielle est effectué sur la soupape de sécurité (100, 110).

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 10240687 B2
- DE 102008045775 A1
- WO 2007087030 A1
- US 10041610 B2
- US 10234058 B2
- US 8540211 B2
- DE 19924377 B4
- DE 102006045775 A1